# FASCICULE DE BREVET EUROPEEN

(11) **EP 2 098 415 B1**
(45) Date de publication et mention de la délivrance du brevet: **04.05.2011**
(21) Numéro de dépôt: 09153773.8
(22) Date de dépôt: 26.02.2009
(51) Int. Cl.: B60R 19/48, G10K 11/00

(54) **Support pour capteur destiné à être placé sur un véhicule automobile**
Sensorträger für Kraftfahrzeuge
Sensorholder for automobile

(30) Priorité: 03.03.2008 FR 0851368
(43) Date de publication de la demande: 09.09.2009
(73) Titulaire: Compagnie Plastic Omnium, 69007 Lyon (FR)
(72) Inventeur: Pervis, Sébastien, 69300, Caluire (FR)
(74) Mandataire: Remy, Vincent Noel Paul

(56) Documents cités:
- EP-A- 1 342 626
- DE-U1- 20 010 478
- US-A1- 2002 130 770

## Description

La présente invention concerne le domaine des supports de capteurs pour véhicule automobile et en particulier mais non exclusivement des supports de capteurs PDC (acronyme anglais de Park Distance Control) tels que des capteurs à ultrasons.

DE 200 10 478 U décrit un support selon le préambule de la revendication 1.

On connaît déjà, dans l'état de a technique, un support d'un capteur de type PDC comportant une paroi essentiellement cylindrique délimitant une zone de réception du capteur, la paroi comprenant un bord libre et un bord lié à une plaque, laquelle est munie d'un orifice en regard de la zone de réception.

Un capteur PDC destiné à être placé dans le support comprend un embout cylindrique de forme essentiellement complémentaire de la paroi du support, embout duquel sort un connecteur électrique formant un coude avec ledit embout, guidé par une excroissance latérale de l'embout. L'embout comprend une extrémité destinée à dépasser de la plaque lorsqu'il est monté sur le support. Un joint est emmanché sur cette extrémité de l'embout. Le joint permet notamment, lorsque l'ensemble du capteur et du support sont montés sur le véhicule automobile, de protéger le capteur des perturbations extérieures telles que l'eau ou la poussière.

Le support comprend deux encoches en vis-à-vis ménagées dans la paroi cylindrique, chaque encoche débouchant sur le bord libre de la paroi et facilitant l'insertion de l'embout du capteur dans le support.

Pour mettre en place le capteur dans le support, on l'y insère par le bord libre de la paroi jusqu'à ce que l'excroissance latérale de l'embout vienne se loger dans l'une des deux encoches.

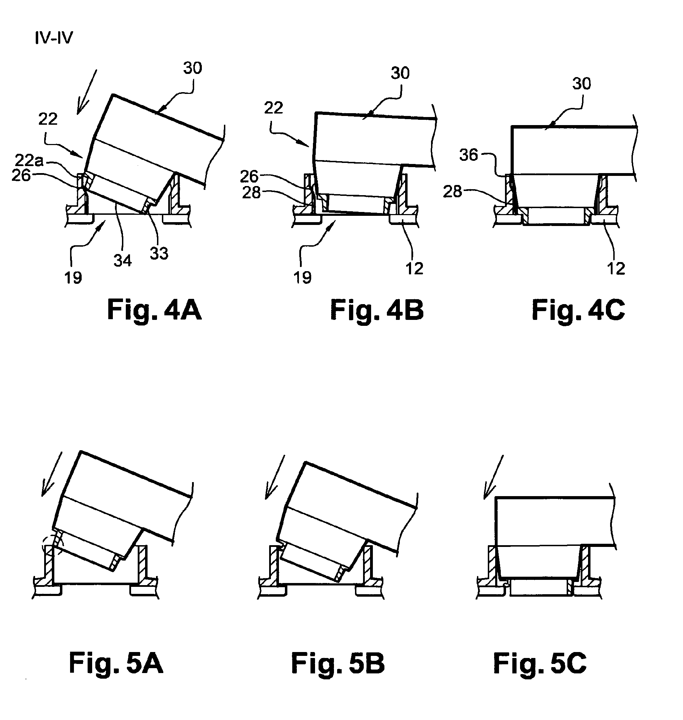

L'embout est d'abord inséré en étant incliné par rapport à sa position montée dans le support, comme cela est visible sur la figure 5A. Dans ce cas, l'extrémité de l'embout du capteur est susceptible de reposer sur le fond de l'autre encoche, située en vis-à-vis de l'encoche par laquelle dépasse le connecteur.

Le capteur incliné est ensuite redressé dans un mouvement de translation et de rotation, de manière que son extrémité dépasse de l'orifice de la plaque (voir figure 5C).

Lors de cette opération de déplacement de l'embout, le joint est susceptible de s'abîmer. En effet, s'il entre en contact avec le fond de l'encoche, le joint a tendance à roulotter, comme on le voit sur la figure 5B. Si cela se produit, le joint n'est pas placé dans sa position optimale une fois le capteur monté dans le support et ne remplit pas sa fonction de protection du capteur, comme cela est montré à la figure 5C. L'ensemble du capteur et du support est alors susceptible d'être mis au rebut.

L'invention a pour but d'éviter la dégradation du joint lors de la mise en place du capteur dans le support et de diminuer le taux des pièces mises au rebut après cette opération.

A cet effet, l'invention a pour objet un support selon la revendication 1.

Ainsi, la paroi présente un chanfrein au voisinage du fond de l'encoche, ce qui dégage un passage pour le joint lors du redressement de l'embout. L'opérateur chargé de la mise en place du capteur dispose donc de plus d'espace pour déplacer l'embout sans que le joint ne touche la surface interne de la paroi du support.

En outre, la tenue mécanique du support n'est pas altérée de façon significative par la présence du chanfrein car celui-ci peut être très localisé. De plus, pour assurer le passage de l'embout sans endommagement du joint, il n'est pas nécessaire de modifier le reste de la paroi, qui peut alors assurer de façon satisfaisante le positionnement du capteur dans le support.

Selon l'invention, l'encoche comprend un prolongement dans sa partie centrale: elle est plus profonde qu'une encoche d'un support de l'état de la technique, ce qui permet de diminuer encore les risques d'endommagement du joint.

Optionnellement, le chanfrein comprend une zone de support formant zone d'appui pour le capteur lorsque ce dernier est monté dans le support.

Dans ce cas, le chanfrein permet le passage du joint sans dégradation lors de la mise en place du capteur dans le support et participe en outre à la bonne tenue mécanique du capteur dans le support. Le passage de l'embout sans dégradation du joint peut donc être assuré même si le redressement de l'embout est effectué au voisinage de zone d'appui du capteur sur le support.

L'invention peut également comprendre l'une ou plusieurs des caractéristiques de la liste ci-dessous :
- l'épaisseur de la paroi varie essentiellement continûment dans le chanfrein. De cette façon, la paroi ne comprend pas de partie marquant une dénivellation soudaine de la surface interne, qui pourrait constituer un appui privilégié pour le joint, entraînant du même coup son roulottage et sa dégradation. On diminue donc encore le taux de rebut de l'ensemble du capteur et du support,
- en particulier, le chanfrein a la forme d'une portion de cône,
- le chanfrein est ménagé dans une portion de paroi située entre le fond de l'encoche et le bord opposé au bord libre de la paroi. En particulier, le chanfrein borde au moins une partie du fond de l'encoche, notamment le fond dans sa partie centrale. Dans un mode de réalisation particulièrement avantageux, l'encoche comprend un prolongement, encadré par le chanfrein. En effet, on considère que la zone d'appui pour le capteur formée sur la paroi de chaque côté du prolongement de l'encoche est suffisante pour ne pas dégrader la tenue mécanique du capteur dans le support et on dégage la partie centrale de cette zone pour favoriser encore le passage de l'embout sans contact du joint avec la paroi,
- le support comprend des moyens de centrage pour guider le capteur jusqu'à une position dans laquelle il est en position montée dans le support, comprenant notamment au moins une nervure de centrage ménagée sur la surface interne de la paroi,
- au moins une nervure de centrage est ménagée sur une partie de paroi située entre le fond de l'encoche et le bord opposé au bord de la paroi. Ainsi, la nervure est située à l'endroit où l'extrémité du joint est la plus susceptible d'être en contact avec la paroi. Si c'est le cas, son extrémité entre en contact avec la nervure sur une largeur très limitée et non directement avec la surface interne de la paroi (ce qui entraînerait un contact sur une largeur plus importante). Le contact du joint avec la nervure est donc moins susceptible d'entraîner le roulottage et le blocage du joint en une mauvaise position,
- la nervure est conformée de sorte qu'à l'extrémité de la nervure située du côté du fond de l'encoche, la dimension de la nervure de direction normale à la surface interne, appelée également hauteur de nervure, varie continûment. De cette façon, il n'existe pas de dénivellation soudaine de la surface interne pouvant favoriser l'appui du joint sur la paroi et le roulottage de celui-ci,
- le support comprend deux encoches en vis-à-vis, un chanfrein étant ménagé dans la paroi au voisinage du fond de chacune des encoches.

L'invention sera mieux comprise à la lecture de la description qui va suivre, donnée uniquement à titre d'exemple et faite en se référant aux dessins dans lesquels :
- la figure 1 est une vue en perspective d'un support de capteur selon un mode de réalisation de l'invention, avant montage du capteur,
- la figure 2 est une vue en perspective d'une surface interne d'une partie d'une paroi du support de la figure 1,
- la figure 3 est une vue schématique en perspective du support de capteur de la figure 1, après montage du capteur dans le support,
- les figures 4A à 4C sont des vues en coupe selon IV-IV du support lors de différentes étapes de montage du capteur dans le support de la figure 1,
- les figures 5A à 5C sont des vues en coupe similaires aux coupes IV-IV d'un support de l'état de la technique lors du montage du capteur dans le support.

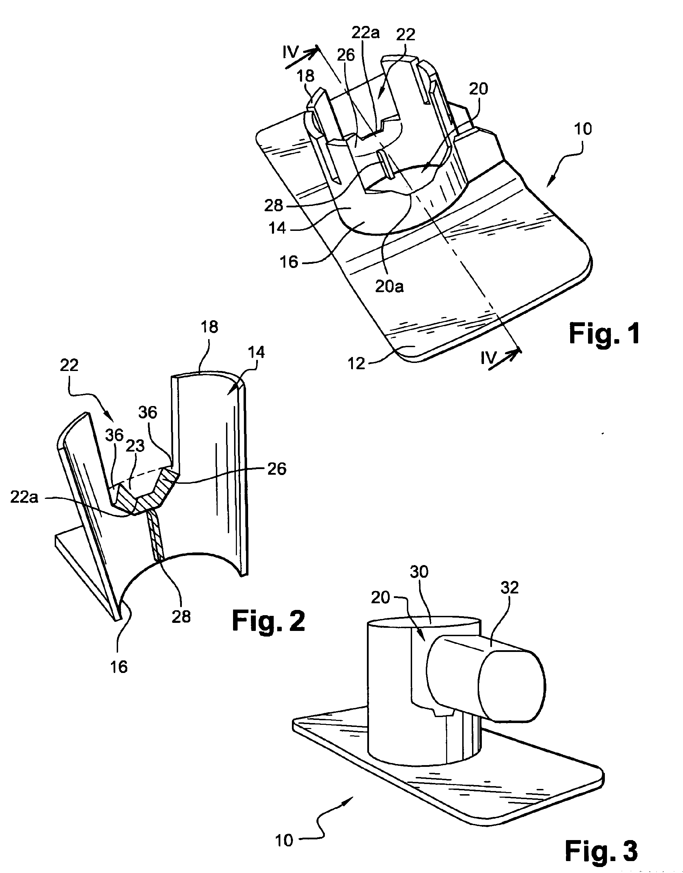

On a représenté, sur la figure 1, un support 10 dans lequel est destiné à s'engager un capteur de type PDC, non représenté sur la figure. Un tel support comprend une plaque 12 et une paroi de guidage 14 comprenant un bord 16 lié à la plaque 12 et un bord 18 opposé et libre.

Le support 10 est destiné à être fixé sur une face non visible d'une pièce de carrosserie de véhicule automobile, telle qu'une peau de pare-chocs, par exemple par l'intermédiaire de vis ou de rivets, par collage ou par soudage.

Comme on le voit sur la figure 1, la paroi 14 est essentiellement cylindrique et comprend une surface interne délimitant une zone de réception du capteur. En regard de la zone de réception du capteur, la plaque présente un orifice 19.

Des encoches 20, 22 sont ménagées dans la paroi 14 et sont disposées en vis-à-vis. Chaque encoche comprend une embouchure débouchant sur le bord libre 18 de la paroi et un fond opposé, respectivement 20a, 22a. Chaque encoche a une forme générale en U. En outre, chaque encoche présente un prolongement 23 dans sa partie centrale s'avançant vers le bord lié de la paroi (le prolongement 23 étant délimité sur la figure 2 par une ligne en pointillés).

Comme on le distingue plus clairement sur la figure 2, un chanfrein 26 est ménagé dans la paroi 14 au voisinage de l'encoche 22 du côté de la surface interne de la paroi. Un chanfrein identique au chanfrein 26 est ménagé au voisinage de l'encoche 20.

Le chanfrein s'étend sur une portion de paroi ayant une forme générale en U. Il est situé entre le fond 22a de l'encoche 22 et le bord lié 16 de la paroi. Il borde le fond de l'encoche et comprend deux montants s'étendant de chaque côté du prolongement 23 et une partie inférieure bordant le fond de l'encoche, au niveau du prolongement 23 de celle-ci, comme on le voit plus particulièrement sur la figure 2.

Le chanfrein 26 a une forme de portion de cône, comme on le voit plus particulièrement sur la figure 2. Ainsi, l'épaisseur de la paroi au niveau du chanfrein 26 varie continûment.

La paroi 14 présente au moins une pluralité de nervures de centrage 28, dont une seule est visible sur la figure 2. Ces nervures sont en saillie par rapport à la surface interne de la paroi 18 et permettent de guider le capteur jusqu'à sa position montée dans le support. Les nervures de centrage 28 sont ménagées sur une partie de paroi située entre le fond de l'encoche 20a, 22a et le bord 16 lié à la plaque, plus particulièrement entre le chanfrein 26 et le bord 16 lié à la plaque.

Comme on peut le constater plus particulièrement sur les figures 4A à 4C, à l'extrémité de la nervure située du côté du fond de l'encoche 20a, la nervure est chanfreinée de sorte que la dimension de la nervure normale à la surface interne de la paroi varie continûment.

On va maintenant décrire la mise en place du capteur dans le support tel que décrit sur les figures 1 et 2.

Comme on le voit à la figure 3, le capteur comprend un embout 30 destiné à être monté dans la zone de réception délimitée par la paroi 14 du support ainsi qu'un connecteur 32 permettant de connecter le capteur à des moyens d'alimentation électrique. Un joint 33 circulaire est emmanché sur une extrémité 34 de l'embout, ce joint 33 permettant de protéger le capteur des perturbations extérieures.

Lorsque l'embout est monté dans le support, comme on le voit à la figure 3 et à la figure 4C, l'extrémité 34 de l'embout dépasse légèrement de la plaque 12 du support. En outre, une excroissance latérale de l'embout assurant la connexion avec le connecteur traverse l'une des encoches 20.

Pour monter l'embout 30 dans le support 10, on insère l'embout dans la zone de réception de sorte que l'excroissance latérale de l'embout 30 traverse l'encoche 20, l'embout étant incliné relativement à sa position montée dans le support. De cette façon, l'extrémité 34 se trouve proche du fond 22a de l'autre encoche 22. L'embout est ensuite déplacé en translation et en rotation pour positionner l'extrémité 34 dans l'orifice 19 de la plaque. Lors de ce déplacement, comme le chanfrein est arrangé dans la partie du support dans laquelle l'opérateur déplace l'embout pour le redresser de sorte que l'extrémité soit placée en face de l'orifice 19, l'espace disponible pour redresser l'embout est augmenté et le joint 33 ne touche pas la paroi 14.

Ensuite, grâce aux nervures de centrage 28, l'extrémité 34 de l'embout est amenée en face dans l'orifice 19 de la plaque 12. Les nervures sont placées respectivement sous les chanfreins 26, à l'endroit où l'extrémité du joint est le plus susceptible de rentrer en contact avec la paroi. Ainsi, si le joint 33 entre en contact avec la paroi lorsque le capteur est légèrement incliné, du fait du placement de la nervure, il rentre en contact avec la nervure 28. Le contact s'effectue donc sur une largeur moindre que s'il rentrait en contact avec la surface interne et les risques de roulottage sont diminués.

En outre, comme l'épaisseur de la portion de paroi 26 et celle de la nervure varient continûment, la paroi 14 ne comprend pas de dénivellation soudaine sur laquelle l'extrémité du joint 33 pourrait appuyer de façon privilégiée, ce qui faciliterait le roulottage du joint.

Le roulottage du joint et l'endommagement de celui-ci peuvent donc être évités grâce au support selon l'invention.

Une fois le capteur en place dans le support, on remarque que la portion de paroi 26 comprend une zone 36 formant zone d'appui pour le capteur lorsque celui-ci est monté dans le support. Ainsi, le chanfrein 26 permet à la fois de dégager le passage pour la mise en place du capteur et de former un appui pour le capteur lorsqu'il est en position montée dans le support.

Il est à noter que le support est en matière plastique, par exemple en matière thermoplastique telle que le polypropylène et est formé par moulage.

On notera que l'invention n'est pas limitée au mode de réalisation précédemment décrit.

En effet, le support n'est pas forcément réalisé dans les matériaux cités plus haut. En outre, la forme de celui-ci peut varier.

De plus, l'utilisation de nervures de centrage est optionnelle. D'autres moyens de centrage peuvent également être utilisés en supplément ou en remplacement des nervures.

Il est également à signaler qu'une portion de paroi peut être ménagée au voisinage de seulement une des encoches, même si cela oblige à choisir un sens privilégié pour le capteur.

## Revendications

1. Support (10) dans lequel est destiné à s'engager un capteur (30), plus particulièrement un capteur du type PDC (Park Distance Control) tel qu'un capteur à ultrasons, **caractérisé en ce qu'**il comprend :
- une paroi (14) comportant une surface interne délimitant une zone de réception du capteur et comprenant un bord libre (18),
- au moins une encoche (20 , 22) ménagée dans la paroi et comprenant une embouchure débouchant sur le bord libre et un fond (20a, 22a) opposé, conformée pour permettre l'insertion du capteur dans la zone de réception,
la paroi présentant un chanfrein (26) au voisinage du fond de l'encoche, du côté de la surface interne, le support étant charactérisé **en ce que** l'encoche comprend un prolongement (23) dans sa partie centrale.

2. Support selon la revendication précédente, dans lequel le chanfrein comprend une zone du support (36) formant zone d'appui pour le capteur lorsque ce dernier est monté dans le support.

3. Support selon l'une quelconque des revendications précédentes, dans lequel l'épaisseur de la paroi varie essentiellement continûment dans le chanfrein (26).

4. Support selon la revendication précédente, dans lequel le chanfrein a une forme de portion de cône.

5. Support selon l'une quelconque des revendications précédentes, dans lequel le chanfrein (26) est ménagé sur une portion de paroi située entre le fond de l'encoche et le bord opposé au bord libre de la paroi.

6. Support selon l'une quelconque des revendications précédentes, dans lequel le chanfrein (26) borde au moins une partie du fond (22a) de l'encoche, notamment le fond dans sa partie centrale.

7. Support selon la revendication précédente, dans lequel le prolongement (23) est encadré par le chanfrein (26).

8. Support selon l'une quelconque des revendications précédentes, dans lequel le support comprend des moyens de centrage pour guider le capteur jusqu'à une position dans laquelle il est en position montée dans le support, comprenant notamment au moins une nervure de centrage (28) ménagée sur la surface interne de la paroi.

9. Support selon la revendication précédente, dans lequel la nervure de centrage est ménagée sur une partie de la paroi située entre le fond de l'encoche et le bord opposé au bord libre de la paroi.

10. Support selon la revendication précédente, dans lequel la nervure est conformée de sorte qu'à l'extrémité de la nervure située du côté du fond de l'encoche, la dimension de la nervure de direction normale à la surface interne varie continûment.

11. Support selon l'une quelconque des revendications précédentes, comprenant deux encoches en vis-à-vis, un chanfrein étant ménagé dans la paroi au voisinage du fond de chacune des encoches.

## Claims

1. Support (10) in which a sensor (30) is to be engaged, more particularly a sensor of the park distance control (PDC) type, such as an ultrasound sensor, the support being **characterized in that** it comprises:
- a wall (14) having an inner surface defining a zone for receiving the sensor and including a free edge (18);
- at least one notch (20, 22) formed in the wall and including both an opening opening out in the free edge and an opposite end wall (20a, 22a), the notch being shaped to enable the sensor to be inserted in the reception zone;
the wall presenting a chamfer (26) in the vicinity of the end wall of the notch beside the inner surface, and the support being **characterized in that** the notch includes an extension (23) in its central portion.

2. Support according to the preceding claim, wherein the chamfer includes a support zone (36) forming a bearing zone for the sensor when the sensor is mounted in the support.

3. Support according to either preceding claim, wherein the thickness of the wall varies essentially continuously within the chamfer (26).

4. Support according to the preceding claim, wherein the chamfer is in the form of a portion of a cone.

5. Support according to any preceding claim, wherein the chamfer (26) is provided on a portion of the wall that is situated between the end wall of the notch and the edge opposite to the free edge of the wall.

6. Support according to any preceding claim, wherein the chamfer (26) is adjacent at least in part to a portion of the end wall (22a) of the notch, in particular the end wall in its central portion.

7. Support according to the preceding claim, wherein the extension (23) is bordered by the chamfer (26).

8. Support according to any preceding claim, wherein the support includes centering means for guiding the sensor to a position in which it is in its position mounted in the support, and including in particular at least one centering spline (28) formed on the inner surface of the wall.

9. Support according to the preceding claim, wherein the centering spline is formed on a portion of the wall that is situated between the end wall of the notch and the edge that is opposite from the free edge of the wall.

10. Support according to the preceding claim, wherein the spline is shaped in such a manner that at the end of the spline situated beside the end wall of the notch, the size of the spline in the direction normal to the inner surface varying continuously.

11. Support according to any preceding claim, having two facing notches, with a respective chamfer being formed in the wall in the vicinity of the end wall of each of the notches.

## Patentansprüche

1. Träger (10), der dazu bestimmt ist, dass sich in ihn ein Sensor (30) einfügt, insbesondere in ein Sensor des Typs PDC (Park Distance Control), wie zum Beispiel ein Ultraschallsensor, **dadurch gekennzeichnet, dass** er Folgendes aufweist:
- eine Wand (14), die eine Innenfläche aufweist, die eine Empfangszone des Sensors begrenzt und einen freien Rand (18) aufweist,
- mindestens eine Ausnehmung (20, 22), die in der Wand eingerichtet ist und eine Mündung aufweist, die an dem freien Rand mündet, und einen gegenüber liegenden Grund (20a, 22a), der ausgebildet ist, um das Einfügen des Sensors in die Empfangszone zu erlauben,
wobei die Wand eine Abfasung (26) in der Nähe des Grunds der Ausnehmung auf Seite der Innenfläche aufweist, wobei der Träger **dadurch gekennzeichnet ist, dass** die Ausnehmung eine Verlängerung (23) in ihrem zentralen Teil aufweist.

2. Träger nach dem vorhergehenden Anspruch, bei dem die Abfasung einen Bereich (36) des Trägers aufweist, der einen Auflagebereich für den Sensor bildet, wenn dieser Letztere in dem Träger montiert ist.

3. Träger nach einem der vorhergehenden Ansprüche, bei dem die Dicke der Wand im Wesentlichen kontinuierlich in der Abfasung (26) variiert.

4. Träger nach dem vorhergehenden Anspruch, bei dem die Abfasung eine Form eines Kegelabschnitts hat.

5. Träger nach einem der vorhergehenden Ansprüche, bei dem die Abfasung (26) auf einem Wandabschnitt eingerichtet ist, der sich zwischen dem Grund der Ausnehmung und dem Rand befindet, der dem freien Rand der Wand gegenüber liegt.

6. Träger nach einem der vorhergehenden Ansprüche, bei dem die Abfasung (26) mindestens einen Teil des Grunds (22a) der Ausnehmung umrandet, insbesondere den Grund in seinem zentralen Teil.

7. Träger nach dem vorhergehenden Anspruch, bei dem die Verlängerung (23) von der Abfasung (26) eingerahmt ist.

8. Träger nach einem der vorhergehenden Ansprüche, bei dem der Träger Zentriermittel aufweist, um den Sensor bis zu einer Position zu führen, in der er sich in der in den Träger montierten Position befindet, insbesondere mit mindestens einer Zentrierrippe (28), die an der Innenfläche der Wand eingerichtet ist.

9. Träger nach dem vorhergehenden Anspruch, bei dem die Zentrierrippe an einem Teil der Wand eingerichtet ist, der sich zwischen dem Grund der Ausnehmung und dem Rand befindet, der dem freien Rand der Wand gegenüber liegt.

10. Träger nach dem vorhergehenden Anspruch, bei dem die Rippe derart ausgebildet ist, dass am Ende der Rippe, das sich neben dem Ausnehmungsgrunds befindet, die Abmessung der Rippe in Richtung senkrecht zu der Innenfläche kontinuierlich variiert.

11. Träger nach einem der vorhergehenden Ansprüche, der zwei Ausnehmungen in einander gegenüber aufweist, wobei eine Abfasung in der Wand in der Nähe des Grunds jeder dieser Ausnehmungen eingerichtet ist.
